# EUROPÄISCHE PATENTSCHRIFT

(11) **EP 3 746 689 B1**
(45) Veröffentlichungstag und Bekanntmachung des Hinweises auf die Patenterteilung: **09.03.2022**
(21) Anmeldenummer: 19706379.5
(22) Anmeldetag: 29.01.2019
(51) Int. Cl.: F16L 11/16, F16L 27/10, F16L 27/11, F16L 51/02, F01N 13/18

(54) **LEITUNGSELEMENT MIT REIBMINDERNDER SCHICHT**
LINE ELEMENT HAVING A FRICTION-REDUCING LAYER
ÉLÉMENT DE CONDUITE POURVU D'UNE COUCHE RÉDUISANT LA FRICTION

(30) Priorität: 30.01.2018 DE 102018102078
(43) Veröffentlichungstag der Anmeldung: 09.12.2020
(73) Patentinhaber: Westfalia Metal Hoses GmbH, 57271 Hilchenbach (DE)
(72) Erfinder: BAUMHOFF, Dietmar, 57462 Olpe (DE); HENKELMANN, Michael, 57271 Hilchenbach (DE); SELTER, Oliver David, 57439 Attendorn (DE); GERHARD, Andreas, 57482 Wenden (DE); HAUK, Stefan, 57271 Hilchenbach (DE); MÜNKER, Karl-Heinz, 57271 Hilchenbach (DE); SCHENK, Karsten, 34613 Schwalmstadt (DE); SIEBELS, David Christopher, 44143 Dortmund (DE); WEISS, Matthias, 57271 Hilchenbach (DE); SCKUDLAREK, Sascha Jan, 57258 Freudenberg (DE)
(74) Vertreter: Beckmann, Jürgen
(86) Internationale Anmeldenummer: PCT/EP2019/052035
(87) Internationale Veröffentlichungsnummer: WO 2019/149665

(56) Entgegenhaltungen:
- EP-A1- 3 118 504
- DE-A1-102008 017 465
- DE-A1-102013 105 891
- DE-A1-102013 200 579
- DE-C1- 19 531 796
- DE-U1- 29 707 779
- DE-U1-202015 104 177

## Beschreibung

Die Erfindung betrifft ein Leitungselement mit einem Innenelement und einem Außenelement, die konzentrisch zueinander angeordnet sind. Derartige Leitungselemente werden vorzugsweise in Abgasleitungen in Kraftfahrzeugen verbaut und verbinden einzelne, starre Leitungseinheiten flexibel miteinander.

Im Abgasstrang von Kraftfahrzeugen entstehen Schwingungen, die beispielsweise verursacht werden durch Unwuchten von Rotationselementen im Motor, Turbolader oder in Nebenaggregaten, durch die pulsförmigen Druckverläufe des Verbrennungsmotors, oder durch die Fahrbewegungen in Verbindung mit Fahrbahn-Unebenheiten und deren Rückkopplung in das Fahrgestell. Diesbezüglich haben Leitungselemente, welche auch als Entkopplungselemente bezeichnet werden, die Aufgabe, derartige Schwingungen und Bewegungen im Abgassystem von Kraftfahrzeugen zu entkoppeln. Zudem gleichen sie mögliche Einbautoleranzen aus.

Aus der DE 20 2015 104 177 U1 sind verschiedene Ausführungsformen von Leitungselementen bekannt, welche ein schlauchförmiges Innenelement und ein schlauchförmiges Außenelement enthalten, wobei in der Regel mindestens einer der Schläuche gasdicht ist. Des Weiteren offenbart die WO 2017/016728 A1 Leitungselemente, bei denen durch den Kontakt von Innenelement und Außenelement eine Dämpfung von Schwingungen erzielt wird, wobei eine Reibschicht im Kontaktbereich von Innenelement und Außenelement verschleißmindernd wirkt. Die genannten Dokumente werden durch Bezugnahme vollständig in vorliegende Anmeldung aufgenommen.

Angesichts dessen ist es Aufgabe der vorliegenden Erfindung, einen einfach herstellbaren alternativen Aufbau eines Leitungselementes mit gutem Betriebsverhalten bei langer Lebensdauer bereitzustellen.

Diese Aufgabe wird erfindungsgemäß durch ein Leitungselement nach Anspruch 1 und ein Verfahren nach Anspruch 9 gelöst. Vorteilhafte Weiterbildungen sind in den Unteransprüchen enthalten.

Ein erfindungsgemäßes Leitungselement für Abgasleitungen und dergleichen enthält die folgenden Komponenten:
- Ein schlauchförmiges Innenelement.
- Ein schlauchförmiges Außenelement, welches das Innenelement umgibt und (während des Betriebs) zumindest lokal kontaktiert.
- Eine Gleitschicht, welche im Kontaktbereich von Innenelement und Außenelement auf dem Innenelement angeordnet ist, oder auf dem Außenelement angeordnet ist, oder sowohl auf dem Innenelement als auch auf dem Außenelement angeordnet ist, und welche einen temperaturbeständigen Gleitlack enthält oder hieraus besteht.

Das Innenelement und/oder das Außenelement stehen vorzugsweise punktuell, linienförmig, teilflächig oder vollflächig miteinander Kontakt. Der Kontakt liegt dabei insbesondere während der Benutzung des Leitungselementes vor, also beispielsweise beim Entkoppeln von Schwingungen zwischen einem Motorblock und einem Abgassystem. In der Regel liegt ein Kontakt jedoch ständig vor, d.h. auch während der Ruhephasen des Leitungselementes.

Die Gleitschicht dient zur Verminderung von Reibungs- und Schwingungsverschleiß und ist dadurch gekennzeichnet, dass sie einen geringeren Gleitreibungskoeffizienten aufweist als das Material des Innenelementes bzw. Außenelementes, auf dem sie sich befindet, in Bezug auf das Material des gegenüberliegenden Elementes. Eine auf der Außenseite des Innenelements aufgebrachte Gleitschicht hat demnach gegenüber dem Material des Außenelementes einen geringeren Gleitreibungskoeffizienten als das Innenelement. Bezogen auf Edelstahl als Reibpartner beträgt der Gleitreibungskoeffizient der Gleitschicht vorzugsweise weniger als ca. 0.1, weniger als 0.08, weniger als 0.06, oder weniger als 0.02. Wie üblich ist der Gleitreibungskoeffizient µ dabei definiert als das Verhältnis von Gleitreibungskraft FR zur Normalkraft FN, mit der die Reibpartner gegeneinander gedrückt werden.

Weitere optionale technische Merkmale der Gleitschicht sind, dass diese stabil im Hochtemperaturbereich zwischen 400 und 800°C ist, vorzugsweise aber auch widerstandfähig ist im Niedrigtemperturbereich zwischen 0 und -50 °C. Weiterhin ist sie vorteilhafterweise stabil unter Vakuum- oder Unterdruckbedigungen zwischen P_{abs} = 0 bar und P_{abs} = Pₐₜₘ und/oder im Überdruckbereich bis P_{abs} = 200 bar. Weiterhin ist die Gleitschicht vorzugsweise beständig gegen Brennbarkeit und gegenüber leichter ionisierter Strahlung. Im Gegensatz zu Gleit- oder Schmiermitteln in flüssiger oder pastöser Form treten in der Gleitschicht keine Kriechvorgänge auf und die Aplizierungsstellen sowie deren Umgebung weisen vorzugsweise keine keine Verschmutzung durch Staubpartikel auf. Die reibminderende Eigenschaft ist vorteilhafterweise kombiniert mit einer extrem hohen Belastbarkeit von 0,1N/mm bis 750 N/mm.

Erfindungsgemäß umfasst die Gleitschicht einen temperaturbeständigen Gleitlack. Die Art der Temperaturbeständigkeit richtet sich dabei nach dem vorgesehenen Einsatz des Leitungselementes. In Verbindung mit Abgasleitungen sollte die Gleitschicht vorzugsweise Temperaturen von über 400°C, über 600°C, oder besonders bevorzugt über 800°C aushalten. Unter einem "Gleitlack" wird im Übrigen ein Material verstanden, welches vor bzw. während der Verarbeitung flüssig ist, an der Oberfläche von Innenelement oder Außenelement anhaftet und dort (beispielsweise durch chemische Vernetzung) aushärtet. Die Aushärtung kann unter Raumtemperatur oder bevorzugt Temperaturen zwischen 30 Grad Celsius und 150 Grad Celsius oder 150 Grad Celsius und 500 Grad Celsius erfolgen. Nach dem Aushärten sollte der Gleitlack mit ausreichender Abriebfestigkeit am Untergrund haften und die gewünschte reibmindernde Oberfläche aufweisen.

Die Gleitschicht (der Gleitlack) kann konkret mindestens eines der folgenden Materialien enthalten oder hieraus bestehen: Festschmierstoff, Matrixwerkstoff, Lösungsmittel, Bindemittel und Additive. Die Gleitschicht enthält mindestens eines der folgenden Materialien oder besteht hieraus: PTFE, Titandioxid (TiO2), Graphit, Zinksulfid, (Metall-) phosphat, Bornitrid, Silane, Silicium, Siliciumdioxid, Wolframdisulfid (WS2), Aramidfasern, Glasfasern, Polymer-Verbundwerkstoffe . Beispielhaft für weitere optionale Materialien aber in ihrer Aufzählung nicht abschießend sind:
Molybdändisulfid (MoS₂), Chromnitid (CrN), Aluminium, Aluminiumoxid, Glasperlen, Kohlenstofffasern, Glaskugeln,

Polyamidharze (PAI-Harz), Epoxidharz (PEEK), Polyvinylbutyral Harz, Polyolefine. Besonders bevorzugte Zusatzstoffe (Festschmierstoffe) sind Bornitid und Molybdändisulfid.

Additive zur Verbesserung der Gleitschicht hinsichtlich hydrophoben und/oder, staubabweisenden Eigenschaften, Korrosionsschutz, UV-Beständigkeit, sowie Aushärtedauer und -temperatur, Gesamthärte, Elastizität oder einer Öl-, Fett-, Lösungsmittelbeständigkeit wie beispielhaft Butylglycolacetat, Ethylglycolacetat. Das verwendete Lösungsmittel richtet sich dabei nach der jeweiligen Art der Applikation und hat keinen Einfluss auf die Eigenschaften der sich später ausgehärtenden Beschichtung.

Die Korngröße der Festschmierstoffe kann mittels Streulichtverfahren auf eine dem Fachmann bekannte Weise gemessen werden.

Die verwendete Faserlänge weisen eine mittlere Faserlänge kleiner 1000 Mikrometer, vorzugsweise kleiner 600 Mikrometer auf. Die mittlere Faserdicke ist kleiner als 550 Mikrometer, bevorzugt kleiner als als 50 Mikrometer. Typischerweise dient die Gleitschicht nur dazu, die Oberfläche von Innenelement und/oder Außenelement reibmindernd zu gestalten, während sie nicht tragend ist für die Struktur des Leitungselementes. Demgemäß hat die Gleitschicht vorzugsweise eine verhältnismäßig geringe Dicke, die beispielsweise danach bemessen wird, dass während der Lebensdauer des Leitungselementes kein Durchrieb der Gleitschicht erfolgt. Beispielsweise kann die Gleitschicht eine Dicke von weniger als 50% der Dicke des Innenelementes oder Außenelementes haben (je nachdem, worauf sie sich befindet), vorzugsweise weniger als 20%, weniger als 10%, oder weniger als 5%. In absoluten Zahlen beträgt die Dicke der Gleitschicht typischerweise weniger als 150 µm, vorzugsweise weniger als 50 µm, oder weniger als 10 µm.

Wie bereits erwähnt kann sowohl eine Gleitschicht an der Innenfläche des Außenelementes als auch eine Gleitschicht an der Außenfläche des Innenelementes vorgesehen werden, so dass im Kontaktbereich zwischen Innenelement und Außenelement Gleitschicht auf Gleitschicht reibt. Hierdurch lässt sich eine besonders große Reibminderung erzielen. Die Gleitschichten auf Innenelement und Außenelement können dabei aus denselben Materialen (z.B. demselben Gleitlack) bestehen oder aus unterschiedlichen.

Vorteilhafterweise wird die Gleitschicht erst auf das Innenelement bzw. das Außenelement aufgebracht, nachdem dieses bereits fertiggestellt bzw. produziert und insbesondere in seine endgültige Form gebracht wurde.

Gemäß einer Weiterbildung der Erfindung können das Innenelement und/oder das Außenelement zumindest in einem axialen Abschnitt des Leitungselementes einen nicht kreisförmigen Querschnitt aufweisen. Insbesondere kann es einen ovalen oder mehreckigen oder polygonförmigen, multiradien Querschnitt haben, wobei die Ecken typischerweise abgerundet sind. Des Weiteren ist ein unrundes Innen-/Außenelement in der Regel mit einem runden Außen-/Innenelement kombiniert. Durch die Unrundheit kann auf einfache Weise ein Punkt-, Linien oder Flächenkontakt hergestellt werden.

Beim Innenelement handelt es sich um einen Wickelschlauch, insbesondere um einen metallischen Wickelschlauch. Derartige Wickelschläuche sind in verschiedenen Ausführungsformen (einlagig, mehrlagig, agraffförmig, mit Innenschuppen und/oder Außenschuppen etc.) bekannt. Typische Ausführungsformen sind beispielsweise in der DE 20 2015 104 177 U1 beschrieben.

Des Weiteren ist das Außenelement des Leitungselementes als ein Wellbalg, ein Wickelbalg, oder ein Membranbalg ausgebildet .

Während Wellbälge typischerweise durch in Verbindung mit einer Stauchoperation erfolgenden Innenhochdruckumformung aus einem Rohr hergestellt werden, sind Wickelbälge und Membranbälge im Profilbereich verschweißte, rotations-symmetrische oder wendelgewellte Elemente, die entweder zur Rotationsachse senkrecht ausgeprägte Wellungen oder spiralförmige Wellungen aufweisen. Eine gewickelte Balgstruktur kann vorzugsweise formschlüssig eingehakt oder überlappend oder stoffschlüssig verschweißt sein. Derartige Elemente werden beispielsweise in der DE 10 2008 001 297 B1 oder der DE 10 2011 053 131 A1 beschrieben. Weiterhin kann das Außenelement und/oder das Innenelement mindestens einen der folgenden Werkstoffe enthalten oder hieraus bestehen: Edelstahl, Stahl, Zink, Aluminiumlegierungen, Kupfer, Titan, Tantal, Nickelbasislegierungen, Messing, und/oder Bronze.

Die Erfindung betrifft weiterhin ein Verfahren zur Herstellung eines Leitungselementes gemäß einer der oben beschriebenen Ausführungsformen. Das Verfahren umfasst dabei die folgenden Schritte:
a) Wickeln eines metallischen Bandes zu einem Wickelschlauch, der das Innenelement bildet.
b) Bereitstellung eines Außenelementes, z.B. eines Membranbalges.
c) Beschichten (mindestens) der Außenseite des genannten Wickelschlauches mit einer Gleitschicht und/oder Beschichten (mindestens) der Innenseite des genannten Außenelementes mit einer Gleitschicht, wobei die Beschichtung vollflächig oder/und teilflächig aufgebracht ist.
d) Koaxiales Anordnen des Innenelementes im Außenelement.

Der Schritt c) der Beschichtung kann dabei zeitlich in jeder beliebigen Phase vor, nach oder während der anderen Schritte a), b), d) ausgeführt werden.

Wenn die Gleitschicht erst an dem fertigen Innenelement bzw. fertigen Außenelement aufgebracht wird, wird sie vorteilhafterweise nicht durch dessen Herstellungsprozess (Bandumformung, Wickeln etc.) beansprucht und liegt somit ohne Beschädigungen im fertigen Leitungselement vor. Des Weiteren kann durch das Verfahren die Gleitschicht auf die funktional relevanten Kontaktbereiche beschränkt werden, was den Materialverbrauch auf das Notwendige begrenzt.

Im Folgenden wird die Erfindung mit Hilfe der Figuren beispielhaft näher erläutert. Dabei zeigt:
- Figur 1: einen Längsschnitt durch einen Wickelschlauch mit einer Gleitschicht im Kontaktbereich;
- Figur 2: einen Schnitt durch ein Wandstück eines Leitungselement mit einem Wickelschlauch gemäß Figur 1 als Innenelement und einem Membranbalg mit Gleitschicht als Außenelement;
- Figur 3: einen Schnitt durch ein Leitungselement gemäß Figur 2 in einem kleineren Maßstab.

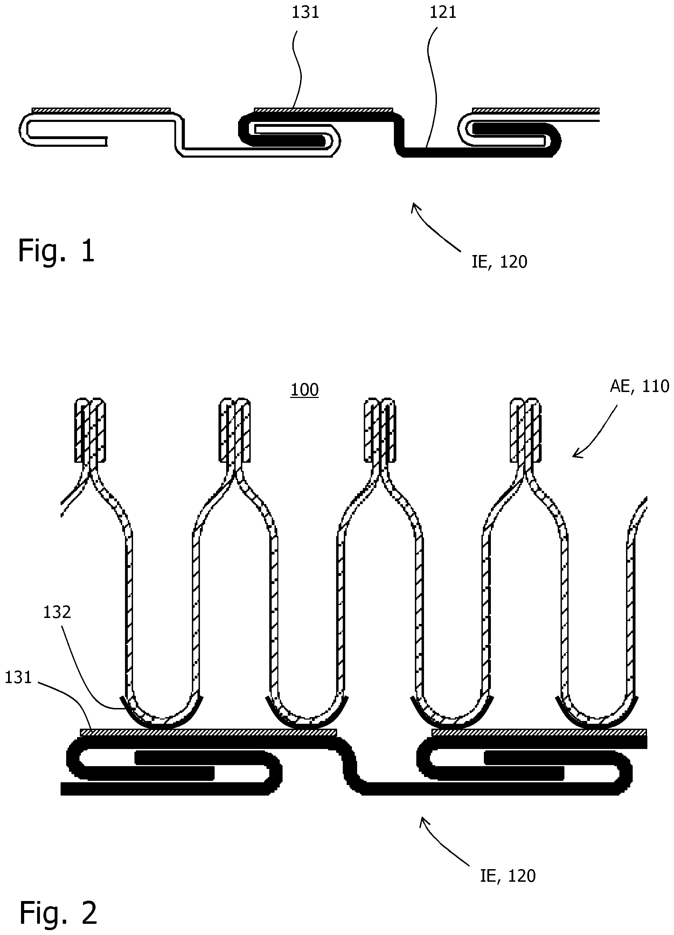

Figur 1 zeigt einen Längsschnitt durch die Windungen eines metallischen Wickelschlauches 120. Dieser wurde durch die Umformung eines metallischen Bandes zu einer Profilform (s. schwarz ausgefüllte Windung in der Figur) und anschließendes Wickeln des profilierten Bandes unter Einhaken benachbarter Windungen gebildet.

Der Wickelschlauch 120 soll als Innenelement IE eines Leitungselementes 100 für Abgasleitungen verwendet werden und ist zu diesem Zweck an seiner Außenseite mit einer Gleitschicht 131 beschichtet (der Wickelschlauch könnte im Prinzip auch als Außenelement verwendet werden und/oder als ein Zwischenschlauch eines aus mehr als zwei koaxialen Schläuchen gebildeten Leitungselementes; in diesem Falle wären nach Bedarf andere Seiten mit einer Gleitschicht zu versehen).

Die Auftragung der Gleitschicht kann vor dem Profilieren und/oder vor dem Wickeln des Bandes vollflächig oder partiell sowie ein- oder zweiseitig erfolgen. Vorzugsweise wird die Gleitschicht 131 nach dem Wickeln des Wickelschlauches 120 auf dessen Außenseite aufgebracht.

Die Gleitschicht 131 kann insbesondere aus einem Gleitlack bestehen, beispielsweise aus dem in seiner Aufzählung nicht abschließenden Gleitlack vom Typ Klübertop TP 46-111, Klübertop TM 06-111, Klübertop TG 05, N, OKS 521, OKS 530, OKS 536, OKS 570, OKS 571, OKS 575, OKS 589, OKS 100,OKS 110, OKS 110, OKS 1300, OKS 1301, OKS 1710, OKS 1750, OKS 1765, OKS 510, OKS 511, OKS , Berucoat AF 130, Berucoat AF 291, Berucoat AF 438 , Berucoat AF 470, Berucoat AF 481, Berucoat AF 732, Berucoat FX 270, Berucoat AF 991, Berucoat FX 670, Berucoat FX 876, Berucoat AK 376, Berucoat AK 978, Berucoat AF 320 E oder deren Derivate.

Die Dicke der Gleitschicht 131 beträgt typischerweise ca. 1 µm bis 50 µm. Die Dicke des Metallbandes 121, aus dem der Wickelschlauch 120 gewickelt ist, hat demgegenüber einen Wert von beispielsweise ca. 300 µm. Gerade hinsichtlich der Schichtdicken sind die Abbildungen daher nicht als maßstäblich anzusehen.

Figur 2 zeigt einen Schnitt durch die Wand eines Leitungselementes 100, welches durch die koaxiale Anordnung des Wickelschlauches 120 aus Figur 1 als Innenelement IE in einem gewickelten Membranbalg 110 als Außenelement AE hergestellt wurde. Beispiele für geeignete Ausführungsformen des Außenelementes AE finden sich in der DE 10 2008 001 297 A1, DE 10 2011 053 131 A1, und DE 10 2013 104 446 A1.

Wie in der Figur angedeutet ist, kann das Außenelement AE im Kontaktbereich zum Innenelement IE (d.h. der Innenseite der Wellentäler seiner Windungen) ebenfalls eine Gleitschicht 132 tragen, so dass im Betrieb Gleitschicht 131 auf Gleitschicht 132 gleitet. Die Gleitschicht 132 des Außenelementes AE kann aus denselben Materialen (z.B. einem Gleitlack) bestehen wie die Gleitschicht 131 am Innenelement IE, oder aus anderen Materialen. Des Weiteren kann sie ein- oder zweiseitig, vollflächig oder partiell (wie dargestellt) auf dem Außenelement AE aufgebracht werden.

In einer alternativen Ausführungsform könnte auch nur die Gleitschicht 132 an der Innenseite des Außenelementes AE vorgesehen sein, während das Innenelement IE ohne Gleitschicht ist.

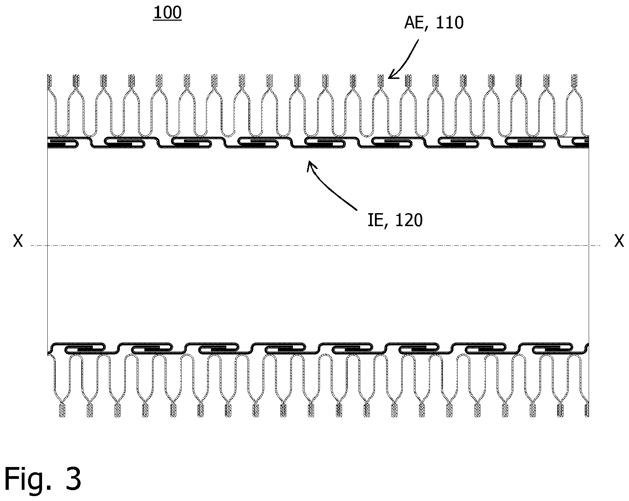

Figur 3 zeigt einen Schnitt durch das Leitungselement 100 von Figur 2 in einem kleineren Maßstab mit beiden Außenwänden, die beidseitig der Schlauchachse X---X liegen. Dabei können sowohl das Außenelement AE als auch das Innenelement IE rotationssymmetrisch zur Schlauchachse sein, also einen kreisrunden Querschnitt (senkrecht zur Zeichenebene von Figur 3) haben.

Besonders bevorzugt ist indes eine Ausführungsform, bei der das Innenelement IE einen unrunden Querschnitt hat, insbesondere einen ovalen Querschnitt. Weitere Einzelheiten zu derartigen Ausführungsformen können der DE 10 2015 102 258 A1 oder der WO 2017/016728 A1 entnommen werden.

## Patentansprüche

1. Leitungselement (100) für Abgasleitungen und dergleichen, enthaltend
- ein Innenelement (IE, 120) in Form eines Wickelschlauches;
- ein Außenelement (AE, 110) in Form eines Wellbalges, eines Wickelbalges, oder eines Membranbalges, welches das Innenelement umgibt und zumindest lokal kontaktiert;
- eine Gleitschicht (131, 132) enthaltend einen temperaturbeständigen Gleitlack, welche im Kontaktbereich auf dem Innenelement (IE) und/oder auf dem Außenelement (AE) angeordnet ist,
wobei die Gleitschicht (131, 132) mindestens eines der folgenden Materialien enthält oder hieraus besteht: PTFE, Titandioxid (TiO₂), Graphit, Zinksulfid, (Metall-) phosphat, Bornitrid, Silane, Silicium, Siliciumdioxid, Wolframdisulfid (WS₂), Aramidfasern, Glasfasern, Polymer-Verbundwerkstoffe .

2. Leitungselement (100) nach Anspruch 1,
**dadurch gekennzeichnet, dass** die Gleitschicht (131, 132) Bornitrid enthält.

3. Leitungselement (100) nach mindestens einem der vorhergehenden Ansprüche,
**dadurch gekennzeichnet, dass** die Gleitschicht (131, 132) weiterhin mindestens eines der folgenden Materialien enthält Molybdändisulfid (MoS₂), Chromnitid (CrN), Aluminium, Aluminiumoxid, Glasperlen, Kohlenstofffasern, Glaskugeln, Polyamidharze (PAI-Harz), Epoxidharz (PEEK), Polyvinylbutyral Harz, Polyolefine,organische und/oder anorganische Bindemittel, Lösungsmittel, und/oder Additive.

4. Leitungselement (100) nach mindestens einem der vorhergehenden Ansprüche,
**dadurch gekennzeichnet, dass** die Gleitschicht (131, 132) eine Dicke von weniger als 30% der Wanddicke des Innenelementes (IE) oder Außenelementes (AE) hat, auf dem sie sich befindet.

5. Leitungselement (100) nach mindestens einem der vorhergehenden Ansprüche,
**dadurch gekennzeichnet, dass** eine Gleitschicht (131) auf dem Innenelement (IE) und eine Gleitschicht (132) auf dem Außenelement (AE) angeordnet ist.

6. Leitungselement (100) nach mindestens einem der vorhergehenden Ansprüche,
**dadurch gekennzeichnet, dass** die Gleitschicht (131, 132) auf das fertig produzierte Innenelement (IE) und/oder Außenelement (AE) aufgetragen worden ist.

7. Leitungselement (100) nach mindestens einem der vorhergehenden Ansprüche,
**dadurch gekennzeichnet, dass** Innenelement (IE) und/oder das Außenelement (AE) zumindest in einem axialen Abschnitt des Leitungselementes einen nicht kreisförmigen Querschnitt aufweist, vorzugsweise einen ovalen oder mehreckigen Querschnitt.

8. Verfahren zur Herstellung eines Leitungselementes (100) nach mindestens einem der vorhergehenden Ansprüche, umfassend die Schritte
- Wickeln eines metallischen Bandes zu einem das Innenelement (IE) bildenden Wickelschlauch (120);
- Bereitstellung eines Außenelementes (AE) in Form eines Wellbalges, eines Wickelbalges, oder eines Membranbalges;
- Beschichten der Außenseite des Wickelschlauches (120) mit der Gleitschicht (131) und/oder Beschichten der Innenseite des Außenelementes (AE) mit der Gleitschicht (132), die den Gleitlack enthält;
- Anordnen des Innenelementes (IE) im Außenelement (AE),
wobei der Gleitlack (131, 132) vor bzw. während der Verarbeitung flüssig ist, an der Oberfläche von Innenelement oder Außenelement anhaftet und dort aushärtet.

## Claims

1. Line element (100) for exhaust pipes and the like, comprising
- an inner element (IE, 120) in the form of a stripwound hose;
- an outer element (AE, 110) in the form of a corrugated bellows, a wound bellows or a membrane bellows, which surrounds the inner element and contacts it at least locally;
- a sliding layer (131, 132) containing a temperature-resistant anti-friction lacquer, which is arranged in the contact zone on the inner element (IE) and/or on the outer element (AE),
wherein the sliding layer contains or consists of at least one of the following materials: PTFE, titanium dioxide (TiO2), graphite, zinc sulfide, (metal) phosphate, boron nitride, silanes, silicon, silicon dioxide, tungsten disulfide (WS₂), aramid fibers, glass fibers, polymer composites.

2. Line element (100) according to claim 1,
**characterized in that** the sliding layer (131, 132) contains boron nitride.

3. Line element (100) according to at least one of the preceding claims, **characterized in that** the sliding layer (131, 132) contains furthermore at least one of the following materials: molybdenum disulfide (MoS₂), chromium nitride (CrN), aluminum, aluminum oxide, glass beads, carbon fibers, glass balls, polyamide resins (PAI resin), epoxy resin (PEEK), polyvinyl butyral resin, polyolefins, organic and/or inorganic binding agents, solvents, and/or additives.

4. Line element (100) according to at least one of the preceding claims, **characterized in that** the sliding layer (131, 132) has a thickness of less than 30% of the wall thickness of the inner element (IE) or the outer element (AE) on which it is located.

5. Line element (100) according to at least one of the preceding claims, **characterized in that** a sliding layer (131) is arranged on the inner element (IE) and a sliding layer (132) is arranged on the outer element (AE).

6. Line element (100) according to at least one of the preceding claims, **characterized in that** the sliding layer (131, 132) has been applied onto the finally produced inner element (IE) and/or outer element (AE).

7. Line element (100) according to at least one of the preceding claims, **characterized in that** the inner element (IE) and/or the outer element (AE) has a non-circular cross section, preferably an oval or polygonal cross section, at least in an axial section of the line element.

8. Method for the production of a line element (100) according to at least one of the preceding claims, comprising the steps of
- winding a metallic band into a stripwound hose (120) forming the inner element (IE);
- providing an outer element (AE) in the form of a corrugated bellows, a wound bellows or a membrane bellows;
- coating the outside of the stripwound hose (120) with a sliding layer (131) and/or coating the inside of the outer element (AE) with a sliding layer (132) which contains the anti-friction lacquer;
- arranging the inner element (IE) in the outer element (AE),
wherein the anti-friction lacquer is liquid before or during processing, adheres to the surface of the inner element or outer element and hardens there.

## Revendications

1. Elément de conduite (100) pour tuyaux d'échappement et similaires, comprenant
- un élément intérieur (IE, 120) sous la forme d'un tuyau enroulé;
- un élément extérieur (AE, 110) sous la forme d'un soufflet ondulé, d'un soufflet enroulé ou d'un soufflet à membrane, qui entoure l'élément intérieur et le contacte au moins localement;
- une couche de glissement (131, 132) contenant une laque de glissement résistant à la température, qui est disposée dans la zone de contact sur l'élément intérieur (IE) et/ou sur l'élément extérieur (AE),
dans lequel la couche de glissement (131, 132) contient ou consiste en au moins un des matériaux suivants : PTFE, dioxyde de titane (Ti0₂), graphite, sulfure de zinc, phosphate (métallique), nitrure de bore, silanes, silicium, dioxyde de silicium, disulfure de tungstène (WS₂), fibres d'aramide, fibres de verre, composites polymères.

2. Elément de conduite (100) selon la revendication 1,
**caractérisé en ce que** la couche de glissement (131, 132) contient du nitrure de bore.

3. Elément de conduite (100) selon l'une quelconque des revendications précédentes,
**caractérisé en ce que** la couche de glissement (131, 132) comprend en outre au moins l'un des matériaux suivants : disulfure de molybdène (MoS₂), nitrure de chrome (CrN), aluminium, oxyde d'aluminium, perles de verre, fibres de carbone, billes de verre, résines polyamides (résine PAI), résine époxy (PEEK), résine de polyvinylbutyral, polyoléfines, liants organiques et/ou inorganiques, solvants et/ou additifs.

4. Elément de conduite (100) selon l'une quelconque des revendications précédentes,
**caractérisé en ce que** la couche de glissement (131, 132) a une épaisseur inférieure à 30 % de l'épaisseur de paroi de l'élément intérieur (IE) ou de l'élément extérieur (AE) sur lequel elle est située.

5. Elément de conduite (100) selon l'une quelconque des revendications précédentes,
**caractérisé en ce qu'**une couche de glissement (131) est disposée sur l'élément intérieur (IE) et une couche de glissement (132) est disposée sur l'élément extérieur (AE).

6. Elément de conduite (100) selon l'une quelconque des revendications précédentes,
**caractérisé en ce que** la couche de glissement (131, 132) a été appliquée sur l'élément intérieur (IE) et/ou l'élément extérieur (AE) fini.

7. Elément de conduite (100) selon l'une quelconque des revendications précédentes,
**caractérisé en ce que** l'élément intérieur (IE) et/ou l'élément extérieur (AE) a une section transversale non circulaire, de préférence une section transversale ovale ou polygonale, au moins dans une section axiale de l'élément de conduite.

8. Procédé de fabrication d'un élément de conduite (100) selon l'une quelconque des revendications précédentes, comprenant les étapes
- l'enroulement d'une bande métallique en un tuyau enroulé (120) formant l'élément intérieur (IE);
- la mise à disposition d'un élément extérieur (AE) sous forme d'un soufflet ondulé, d'un soufflet enroulé, ou d'un soufflet à membrane;
- le revêtement de l'extérieur du tuyau enroulé (120) avec la couche de glissement (131) et/ou revêtement de l'intérieur de l'élément extérieur (AE) avec la couche de glissement (132) contenant la laque de glissement;
- la disposition de l'élément intérieur (IE) dans l'élément extérieur (AE), dans lequel la laque de glissement (131, 132) est liquide avant ou pendant le traitement, adhère à la surface de l'élément intérieur ou de l'élément extérieur et y durcit.
